# EUROPEAN PATENT APPLICATION

(11) **EP 1 647 873 A1**
(43) Date of publication of application: **19.04.2006**
(21) Application number: 04024280.2
(22) Date of filing: 12.10.2004
(51) Int. Cl.: G06F 1/00

(54) **Generic electronic laboratory notebook**

(71) Applicant: Waters GmbH, 65760 Eschborn (DE)
(72) Inventor: Fröhlich, Thorsten, 50858 Köln (DE); Hemmer, Markus, 50858 Köln (DE); Lenzen, Dietmar, 53639 Königswinter (DE)
(74) Representative: Vossius, Corinna

(57) **Abstract**

The present invitation relates to an electronic laboratory notebook system in a distributed communication network comprising:
at least one application server running an electronic laboratory notebook server application;
at least one client workstation running an electronic laboratory notebook client application in communication with the at least one application server via the distributed communication network; and
at least one database for storing data in communication with the at least one application server via the distributed communication network,
wherein said electronic laboratory notebook server application includes means to ensure the security of the data.

## Description

### TECHNICAL FIELD OF THE INVENTION

The invention relates to a computer-implemented laboratory notebook system, and in particular to a generic electronic laboratory notebook system in a distributed communication network to create, store, manage, retrieve and share fully electronic records in ways that meet legal, regulatory, technical and scientific requirements.

### BACKGROUND OF THE INVENTION

Laboratory notebooks are the basis of scientific documentation. Typically, each experiment performed in a research or development laboratory is recorded in a laboratory notebook including the object of the investigation, the experimental or theoretical background, a description of the experiment and its parameters, and the experimental results. When properly kept, a laboratory notebook permanently records, for future proof, what was done on a project, and particularly what inventions were made and when. The laboratory notebook has to provide a complete record of activities in a way that allows co-workers to repeat experiments and obtain the same results without having support from the original author. For centuries, researchers and scientists have been using paper-based laboratory notebooks to record their experiments. Such traditional laboratory notebooks could often be described as a huge pool of thoughts and data that are sometimes useful and, unfortunately, sometimes not useful.

Due to the emergence of digital media for the storage and transmission of information and the prevalence of digitally encoded information, however, the use of paper-based laboratory notebooks has become cumbersome, requiring for instance printing, cutting and pasting, as more and more information originates or is provided in digital form, e.g., data generated by instruments or documents created with word processing software.

Recently, there have been a few attempts to develop electronic alternatives to traditional paper-based laboratory notebooks, such as the E-Notebook (available from Cambridge Soft, Cambridge, MA, USA), the eLabBook (available from LabBook Inc., McLean, VA, USA), LABTrack (available from AVATAR Consulting, Laguna Hills, CA, USA), Expereact (available from ChemExper sprl, Court-St-Etienne, Belgium), MDL Elan (available from MDL Information Systems Inc., San Leandro, CA, USA) and Kalabie (available from Klee Group, Le Plessis Robinson, France). However, all of these attempts have certain disadvantages. For example, each attempt lacks certain essential features which are necessary in order for electronic laboratory notebooks to represent a valid alternative to traditional paper-based laboratory notebooks. This is in part due to insufficient security protocols that authenticate or guarantee the content of the electronic laboratory notebook.

There is thus a need for a computer-implemented system providing a generic electronic laboratory notebook suitable for all workplaces in a company: from chemical, pharmaceutical to biological research, as well as for routine work. This electronic laboratory notebook should solve the problems associated with the prior art and facilitate centralized or distributed long term storage of knowledge independent of language or the type of information in ways that meet legal, regulatory, technical and scientific requirements.

### SUMMARY OF THE INVENTION

According to a first aspect of the invention an electronic laboratory notebook system in a distributed communication network is provided comprising at least one application server running an electronic laboratory notebook server application, at least one client workstation running an electronic laboratory notebook client application in communication with the at least one application server via the distributed communication network, and at least one database for storing data in communication with the at least one application server via the distributed communication network, wherein said electronic laboratory notebook server application includes means to ensure the security of the data.

Further aspects of the invention are defined in the additional claims.

It should be appreciated that the present invention can be implemented and utilized in numerous ways, including without limitation as a process, an apparatus, a system, a device, a method for applications now known and later developed or a computer readable medium. The foregoing and other features and advantages of the embodiments of the present invention will be more readily apparent form the following detailed description which proceeds with reference to the accompanying drawings.

### BRIEF DESCRIPTION OF THE DRAWINGS

FIGURE 1 shows schematically an exemplary system for supporting an electronic laboratory notebook according to the present invention.
FIGURE 2 shows an exemplary page of an electronic laboratory notebook according to the present invention as presented to the user by means of its graphical user interface.
FIGURE 3 shows schematically the different data types and their dependency provided by an electronic laboratory notebook according to the present invention.
FIGURE 4 shows schematically the integration of experimental data provided by external applications into an electronic laboratory notebook according to the present invention.
FIGURE 5 shows schematically the software modules contained in the electronic laboratory notebook server application according to a preferred embodiment of the present invention.
FIGURE 6 shows schematically the use of templates according to a preferred embodiment of the present invention.
FIGURE 7 shows schematically the object workflow according to a preferred embodiment of the present invention.
FIGURE 8 shows schematically the experiment workflow according to a preferred embodiment of the present invention.
FIGURE 9a shows schematically one aspect of the security module contained within the electronic laboratory notebook according to the present invention.
FIGURE 9b shows schematically a further aspect of the security module contained within the electronic laboratory notebook according to the present invention.

### DETAILED DESCRIPTION OF THE INVENTION

### System architecture

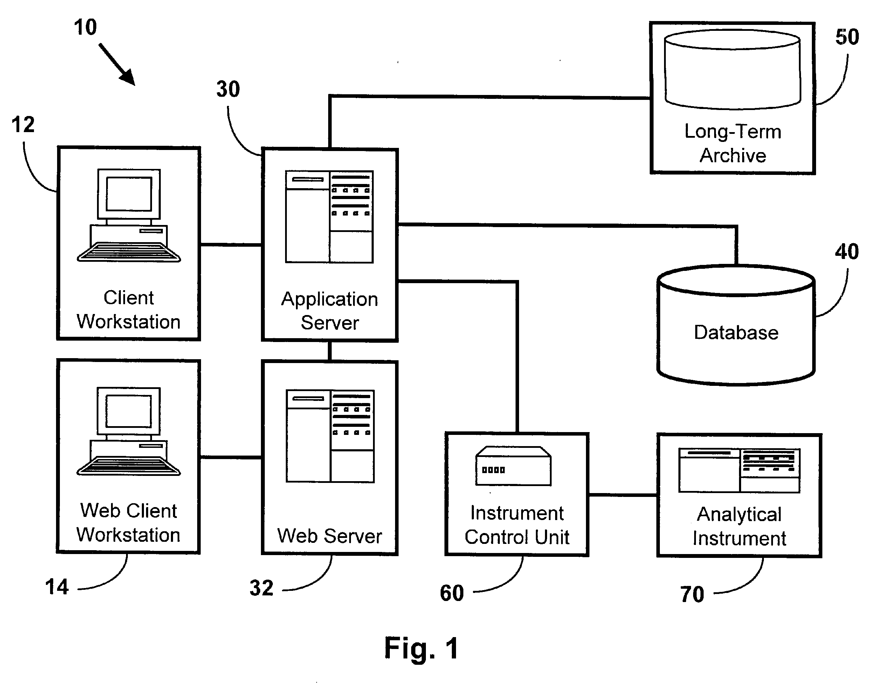

Figure 1 illustrates an exemplary system 10 for supporting the electronic laboratory notebook (ELN) according to the present invention. Two exemplary client workstations 12, 14 are shown which may be connected to the application server 30 using any of a variety of methods known in the art. In this exemplary embodiment workstation 12 is running a full ELN application, i.e. a full client workstation, and workstation 14 is running a world wide web ELN application, i.e. a web client workstation, as will be described in more detail further below.

The web client workstation 14 is connected via the Internet and optionally by a web server 32 to a distributed communication network or LAN comprising the application server 30 and the full client workstation 12. It will be recognized that the web client work station 14 also could be directly connected to the LAN. The LAN further includes a shared database 40 and optionally a long term data archive 50. Preferably, the shared database 40 is a multi-user, multi-view relational database such as an ORACLE database. The long term data archive 50 is used to provide virtually unlimited amounts of "virtual" disk space, e.g., by means of a multi-layer hierarchical storage management system. However, the present invention is not limited to the illustrated embodiment and more or fewer and equivalent types of components can be used also as would be appreciated by those of ordinary skill in the art.

The different components of the system 10 described above, e.g., the client workstations 12, 14, the application server 30, the web server 32, and the database 40 are preferably completely separated to allow conformity with company preferences, workloads, and infrastructure. This can be achieved by adhering to at least a 3-tier client-server architecture or preferably a web-based thin client. Any suitable device connected to the LAN, e.g. a client workstation or an instrument, should be able to interface via TCP/IP to the application sever 30, provided the appropriate client software has been installed and configured thereon, as will be described in more detail further below. Optionally, multiple application servers can be provided which allow for metadata replication. Preferably, the system 10 allows the support of wireless environments, handheld and TabletPCs, Offline Clients, access via voice-control and the like.

The architecture of the system 10 readily allows the connection of several such LANs all over the world. This is particularly advantageous for globally operating companies that run several research laboratories in different countries and/or continents. Accordingly, all data and related metadata are immediately globally available. Search functions, which are described in more detail further below, are available for all servers simultaneously. It is possible for a user to access all electronic notebook pages on client hardware anywhere in the world. A support of corporate wide multi-site multi-server storage is, thus, also possible.

### Electronic Laboratory Notebook Application

In this section, the ELN applications running on a server and on a client will be described in more detail. As will become clear to the person skilled in the art, the ELN server and client applications are advantageously realised by object-oriented programming techniques such as the C++ programming language. However, other programming languages can also be used.

Preferably, there are two possible ways of accessing the information stored by the ELN: i) by means of a normal client mode, or ii) by means of a web client mode. In the normal client mode, the user runs a client version of the ELN on his local desktop, e.g., client workstation 12 shown in figure 1, giving him the ability depending on his access rights to work on a given experiment, i.e. to modify data. The web client mode uses an intranet or Internet browser. In this mode, it is possible to display the current status of an experiment e.g., as a PDF document. However, in the web client mode, it is not possible to modify data in the ELN.

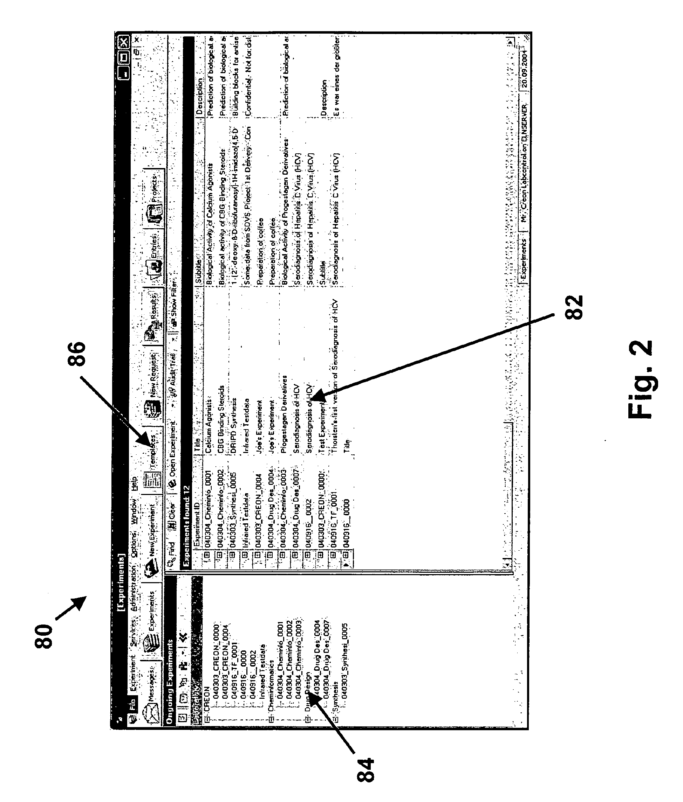

In both modes, the user is presented an intuitive graphical user interface (GUI) as is well known in the art. Figure 2 shows schematically an exemplary page 80 of the electronic laboratory notebook according to the present invention as presented to the user in the normal client mode by means of its GUI. As will be described in more detail further below, this exemplary page 80 provides a detailed list 82 of the experiments the user currently is involved in including an experiment ID, experiment title and subtitle as well as a short description of the experiment. Furthermore, a directory list 84 of experiments performed within different laboratories and several menu bars 86 are presented allowing the user to interact with the ELN according to the present invention.

Research in such areas as the biomedical or pharmaceutical fields entails a broad range of data and information comprising laboratory protocols, laboratory notes and protocol implementations, instrument data and the like. This plethora of data and information is obtained or created from a variety of sources in a variety of ways in a variety of different formats. However, due do the generic approach of the ELN according to the preferred embodiment, it becomes possible to seamlessly integrate and store this wealth of knowledge, as will become clear from the more detailed description further below.

In contrast to a specific application, the generic ELN according to the preferred embodiment is not designed for a specific application, usage or environment and can be easily adapted to any laboratory environment by the researcher who is working on the experiment without the need to change the software. The generic approach of the ELN allows it to communicate virtually with any application instead of restricting it to a few.

Research efforts do not occur in a vacuum. Research teams typically have access to information that is contained both within the enterprise and through public sources. To conduct the research program, researchers make use of information in these repositories and contribute new information to them. Thus, laboratory notebooks are themselves parts of larger networks and collections. The "basic unit" of a traditional paper-based laboratory notebook is the page. Several of these pages make up one laboratory notebook. Such laboratory notebooks store experimental methods, results and conclusions performed in the course of certain projects as part of an overall research program, typically in a chronological order.

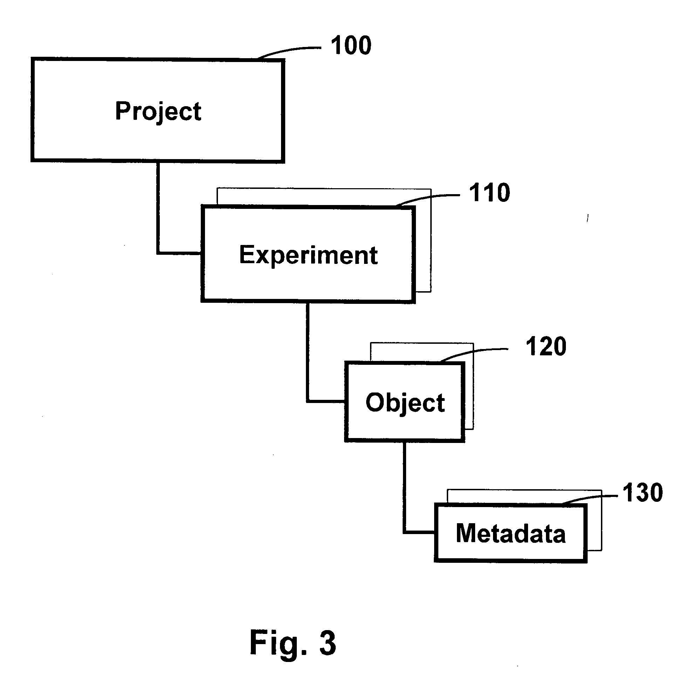

A substantially similar way of structuring information and data is adopted by the ELN according to the present invention aiiowing for a smooth transition from paper-based laboratory notebooks to electronic ones. As can be taken from figure 3, this simple data structure reflects the daily work in a research or development laboratory providing different data types, i.e. a project 100, an experiment 110, a notebook object 120 and metadata 130 data type. A project 100 is a collection of different experiments 110. The experiment 110 is a collection of information in a logical context corresponding to a new page in a conventional paper-based notebook. Experiments 110 contain a series of different notebook objects or entries 120 similar to entries in a paper-based laboratory notebook containing information units, such as text, images, tables, graphs and the like. An experiment essentially is a collection of files provided by applications such as MS Word, MS Excel, ISIS/Draw, Empower, MassLynx and the like. Finally, the "meaning" of data is provided by metadata 130 that describe the data and provide the context for its interpretation. Some metadata items are almost universally applicable, e.g., for legal purposes the date and time stamps, digital signatures, and the like. It is possible, to define and edit additional metadata for each type of notebook object. Although the above "hierarchy of data" according to the preferred ELN is exemplary, it provides advantages in that the workflows in a laboratory are closely reflected.

Usually, a scientist or user will be adding, editing or deleting notebook objects in a specific experiment that he is working on at a given moment, wherein the experiment might constitute part of a long-term project. Advantageously, the present invention allows the user to work similarly to a traditional paper-based laboratory notebook, where data is inserted, stricken-out, updated and the like. The present invention automatically controls versions and signatures, so that any changes to the notebook can be traced back to when and by whom the changes where made. Each notebook entry comprises administrative data (e.g., title/subject, investigator, date, signature and the like), a short statement of purpose, a protocol including assumptions, equations, methods, materials, suppliers, instruments, equipment, data, observations, results, interpretations, conclusions, future directions, suggestions and the like.

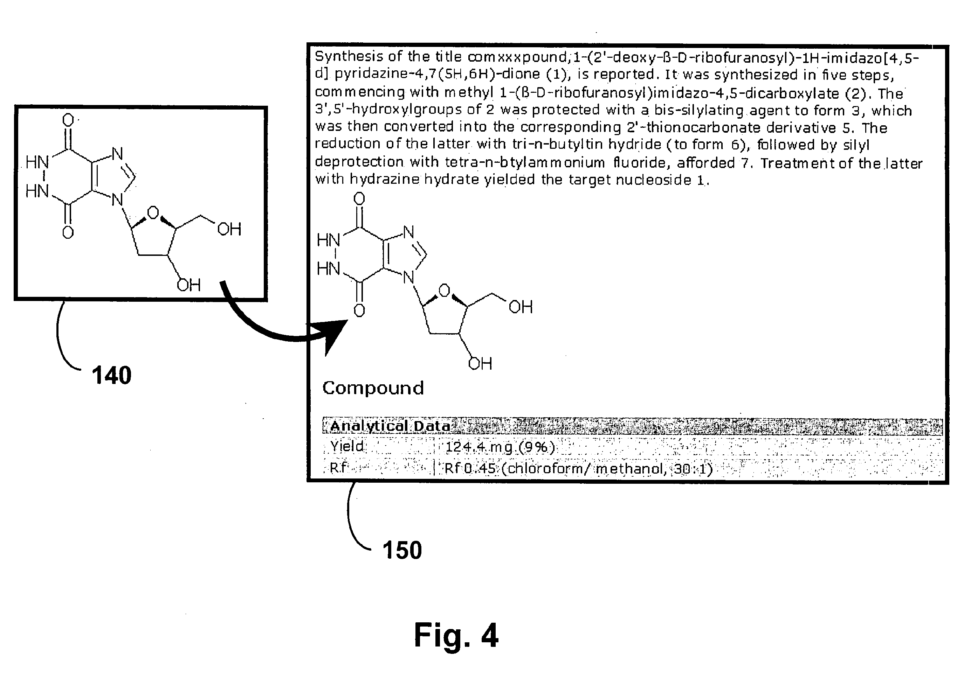

A typical workflow consists of just a couple of steps. First, a notebook object is selected, which can be already pre-defined in a list provided by 3 drop-down menu. Then, the ELN enables editing the object in the native application. Finally, the edited object is signed and transferred to the notebook. This is illustrated in figure 4. The user has produced a graphical representation of a chemical structure 140 by means of an application such as ISIS/Draw software. This object or graphical representation 140 is taken from the native application and added to the notebook 150 according to the present invention which already includes a text object and a table object.

The ELN preferably supports OLE technology (Object Linking Embedding) in order to enable users to create notebook documents without having to worry about switching between different applications and different file formats. OLE or compound documents seamlessly integrate different types of data and components. Chemical reactions, audio clips, spreadsheets, and bitmaps are typical examples of components found in OLE containers. OLE technology is advantageously used by the ELN according to the present invention in order to integrate nearly any application data in the notebook document. In addition, even existing documents and form sheets, such as those created with MS WORD or EXCEL, can be used without additional effort. Linking and Embedding allows integrating any OLE object into the notebook, such as the ISIS/Draw structure shown in figure 4. None of the proprietary data of the object is lost. The embedded object can be edited within the ELN according to the present invention.

The person skilled in the art knows OLE enables one to create objects with one application and then link or embed the objects in a second application. Embedded objects retain their original format and links to the application that created the object. Support for OLE is preferably built into the Windows operating system. Another compound document standard suitable for OLE use has been developed jointly by IBM, Apple Computer and other computer firms and is called OpenDoc. An embedded object is an object created with one application and embedded into a document created by another application. Embedding the object, rather than simply inserting or pasting the object, ensures that the object retains its original format. In fact, the embedded object can be modified with the original program.

Thus, the ELN according to the present invention provides more capabilities than a conventional paper-based notebook. The ELN allows the digital insertion of text, graphs, drawings, spreadsheets, and other objects. Furthermore, it is possible to logically delete notebook objects. However, the deleted objects remain in the laboratory notebook as on paper. Finally, the versioned modification of notebook objects is supported, wherein the laboratory notebook retains the previous version or versions.

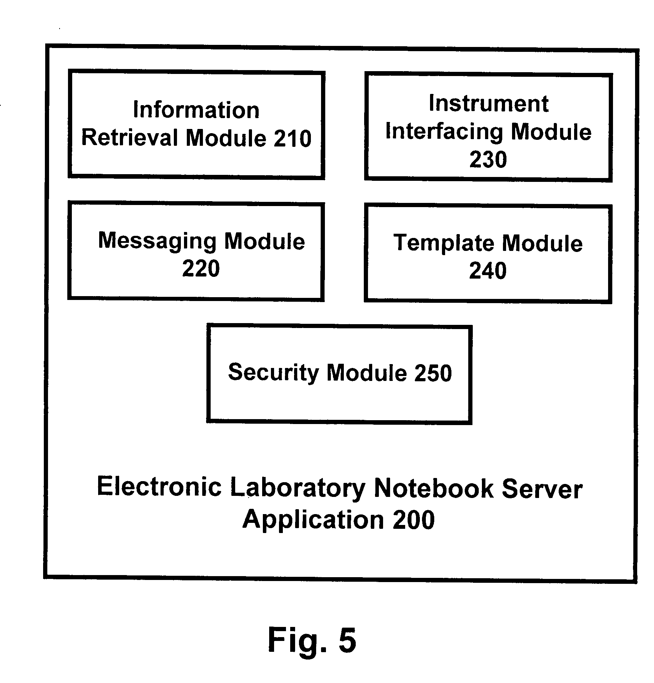

As has become clear from the foregoing discussions, the ELN according to the present invention represents a large pool of data and knowledge. In order for this knowledge to be more readily accessible than in conventional paper-based laboratory notebooks, where one has to physically access such a notebook, i.e. the scientist and the paper-based notebook have to be at the same place, and skip through pages and pages thereof, the ELN according to the present invention provides a highly sophisticated information retrieval module. As can be taken from figure 5, the information retrieval module 210 constitutes one of several software modules provided by the ELN server application 200 according to a preferred embodiment of the present invention.

The information retrieval module 210 allows the user to perform different types of searches such as full text searches, metadata searches, keyword searches, complex searches including Boolean operators, stereo-selective structure searches, molecular formula searches and molecular mass searches which can be initiated by means of appropriate search masks provided within the graphical user interface according to the present invention. This has the advantage that in comparison to traditional paper-based notebooks, all the knowledge created within one organisation is readily available to any member of this organisation all over the world.

According to an exemplary configuration of the ELN the search functions can be divided into four categories, i.e. experiment, content, metadata and structure search. The experiment search allows searching in administrative experiment data of experiment entries in the database. The content search provides the possibility of searching in contents of objects. Searches in metadata of objects and experiments can be performed by means of the metadata search. The structure search allows searching for stereoselective structures and substructures. Stereoselective structure and substructure search is performed on the basis of a substructure search sub-module, which includes tautomer recognition, absolute and relative stereochemistry search, formula and molecular mass search and the like. All of the above searches can be combined to one query reducing the effort to retrieve information from the ELN. The ELN according to the present invention allows storage of generic and/or mandatory metadata (data about data) with each individual notebook object or experiment for subsequent searching. Automatically, text entries are full text indexed as well.

Not only searching for data becomes easy with the ELN according to the present invention, but also the interaction of users working on a given project or experiment is simplified because of a messaging module. The messaging module, indicated with reference sign 220 in figure 5, can be used, e.g., to notify notebook users and external people about upcoming events related to the manipulation of data in the notebook database. The main purpose of the messaging module 220, however, is to request signatures from other notebook users for certification and approval, as will be described in more detail further below. Each time the designated signer opens the ELN according to the present invention (either the native client or on the world wide web) the recent tasks appear in a list and the signer can directly navigate to the corresponding notebook objects or experiments for signing. An approval request may also be sent via email. The ELN according to the present invention, thus, allows the user to review an experiment and to make comments and remarks on particular notebook objects of the experiment or on the entire experiment. The author of the experiment or the object is notified and may reply to a comment, which may lead to an electronically recorded information exchange in a dialog style manner. Because reviews of experiments are not part of the contents of the ELN, the reviews are preferably stored separately. The messaging module incorporated into the present invention, thus, automates administrative and informational workflows.

According to the present invention, several report types are provided. Two exemplary basic reports are the notebook report and the consolidated report. Notebook reports contain all information that typically occurs in paper-based laboratory notebooks, i.e., all information objects independent of whether they are previous versions or they have been removed, and administrative data about the user, date and time of creation, version number and so on. Consolidated reports contain exclusively actual objects, i.e. no previous versions or removed objects, and do not contain any administrative data. Consolidated reports are typically used for final experiment results or as a template for publications. Due to their custom layouts, consolidated reports provide paper equivalent printouts that can be used to facilitate hand-written signatures. Administrative reports are user-definable consolidated reports on administrative data, like experiment registry, title, author, and are typically used for cost and performance evaluations. Audit trail reports provide an overview of each action that has been performed on the ELN database. These flexible reporting means thus allow different views on experiments according to the specific needs of the addressed user community.

### Instrument Interfacing

Probably the most important sources of information in a research laboratory are the analytical devices and instruments themselves, such as HPLC devices, mass spectrometers and the like. In a modern laboratory, virtually every instrument is operated by a controlling computer and accordingly experimental results are provided in electronic form. Since a research laboratory houses many different such devices, possibly from different manufactures, the ELN according to the present invention advantageously provides the capabilities to seamlessly integrate the experimental data and results produced by these analytical devices and instruments, by means of an instrument interfacing module 230 as shown in figure 5.

Figure 1 shows an exemplary analytical instrument 70 that is controlled by the instrument control unit 60 and connected to the ELN system according to the present invention. Although only one analytical instrument 70 and one instrumental control unit 60 are shown for the sake of clarity, the person skilled in the art will appreciate that the ELN according to the present invention advantageously is connected to a plurality of analytical instruments and instrument control units. For instance, instrument 70 could be a HPLC system, a mass spectrometer or the like. A so-called instrument agent (not shown) establishes and maintains a logical connection between the ELN application server and each analytical instrument interfaced with the system. These agents depend on the type of instrument connected to the ELN application server and are preferably installed on the instrument control unit, e.g. a controlling PC physically connected to the analytical instrument where the third-party application that generates or processes instrument data is running.

The instrument agents provided by the ELN according to the present invention are operative to establish and maintain the data communication between the ELN application server and a device/instrument via TCP/IP. Also devices/instruments that cannot request a static IP address can communicate with the ELN application server by means of the instrument agents. Preferably, the agents communicate asynchronously with the ELN application server. Optionally, the agents report data to the ELN application server only when new or modified data is available.

The user of the ELN according to the present invention can obtain the data provided by instruments by means of a service request. A service request is a procedure that defines details for requesting a result to be incorporated into the notebook. The request defines the provider, services, parameters and metadata that have to be transferred. A provider is a software system which accepts requests from the ELN. A service is a result type that a provider delivers to the requesting software. A provider may offer several services. Service metadata is the data which is required by the target system in order to process the service request. Result is a data entity to be incorporated in a visual presentation into the experiment. Notifications are textual comments sent to any user of the ELN for informational purposes. A service request preferably has one of the following states: new, processed, error or success.

For example, if a user of the ELN according to the present invention wants to retrieve the newest results from an HPLC device, he will dispatch a request to retrieve external data. This is achieved by the ELN as in a mailbox. A software agent addresses the device providing the data. This data will be transferred to the inbox of the ELN according to the present invention. Once in the inbox, this data can be analysed and checked by the user. Upon confirmation of the user, the new data will be incorporated into the current experiment. Preferably, the experimental data is sent out in XML format.

According to a preferred embodiment of the invention a "plug-and-play" data interface is used to facilitate the above-mentioned data capture and integration as well as component interfaces between the front-end authoring tools and major back-end systems for long-term data and record preservation and access.

It is envisaged that this service request can be even more automated by dispatching service requests at certain intervals and the provider might not be a single analytical instrument but the server of a laboratory housing several of such instruments. The data service requests can be accustomed to the needs of the user. According to a preferred embodiment, the ELN provides several templates for these service requests, as will be discussed in more detail further below.

It is often the case that not all the data provided by a instrument will be of interest to the specific experiment at hand. For instance, a scientist performing a specific experiment could be interested in the spectrum of some analyte between a wavelength of 200 and 300 nm. However, the spectrum provided by the instrument covers a range from 100 to 900 nm. In the ELN, the user will see only the part of the spectrum that he is interested in. However, all of the data provided by the instrument will be stored and, thus, will be available in the future. Along with the data itself, metadata will also be stored, such as the type of instrument, the date of the experiment, sample ID, and the like, in order for this information to be easily retrievable by the information retrieval system incorporated into the ELN.

The preferred ELN according to the present invention furthermore provides open interfaces to other information systems such as electronic record management systems, laboratory information management systems (LIMS), enterprise resource planning, or chemistry related information systems such as ISIS/Host.

### Templates

Research projects are diverse and difficult to characterize in a standardized way. What research projects do have in common is the incorporation of domain knowledge, e.g., a particular focus in medicinal chemistry, and the reliance upon experimental methods, While observational methods certainly play a role in biomedical research, e.g. exploring disease factors through pedigree analysis, the development of protocols and their application to experimental research are at the heart of most biomedical research projects.

Many laboratories that use paper-based laboratory notebooks have clearly defined workflows with little variation, i.e. performing rather similar experiments with a single instrument. Consequently, researchers working in such laboratories expect a user-interface design similar to a paper-based laboratory notebook.

Some laboratories on the other hand, e.g., fundamental research laboratories, where research projects may not be so well-defined, require a more flexible handling of data and information for the individual experiments in order to be able to include all different and, in particular, new types of information, like molecular representations, spectra, chromatograms, functional graphs, instrumental sketches, images, photos, formatted or unformatted text, tables, lists, diagrams and the like.

In order to meet these needs, the ELN according to the present invention preferably provides means to improve the organizational quality of the content of the notebook including predefined templates as well as editors to create new templates. This functionality is provided by the template module 240 as part of the ELN server application 200 shown in figure 5.

When starting a new experiment, the researcher will have the possibility to select from a variety of predefined notebook templates and layout sheets via the graphical user interface. Since these templates, e.g., an interactive template created with MS Word forms, are easy to fill out with less errors and a higher content quality, said templates help users to save time. However, as will be explained in more detail further below, a user can modify the existing templates or build his own templates from scratch that suit his standard experiments best by means of editors. Furthermore, existing software templates can be used such as, for example, MS Excel worksheets.

It is envisaged that a new experiment can be defined on the basis of a template, e.g., by selecting the main laboratory for the new experiment, selecting a project for the new experiment, selecting a template on the basis of the project definition for the new experiment and creating the new experiment with predefined objects, predefined sequences of objects and/or optional or mandatory predefined metadata.

A notebook template collection can be used to define a draft layout when a new experiment is started. Template collections usually represent the workflow of scientific documentation for recurrent studies in research or for predefined processes in quality control. A template collection might be for instance: an introduction, a reaction scheme, an experimental description, results, and a conclusion. By selecting the template collection on starting a new experiment, the ELN according to the present invention prepares the entire experiment and allows for customization.

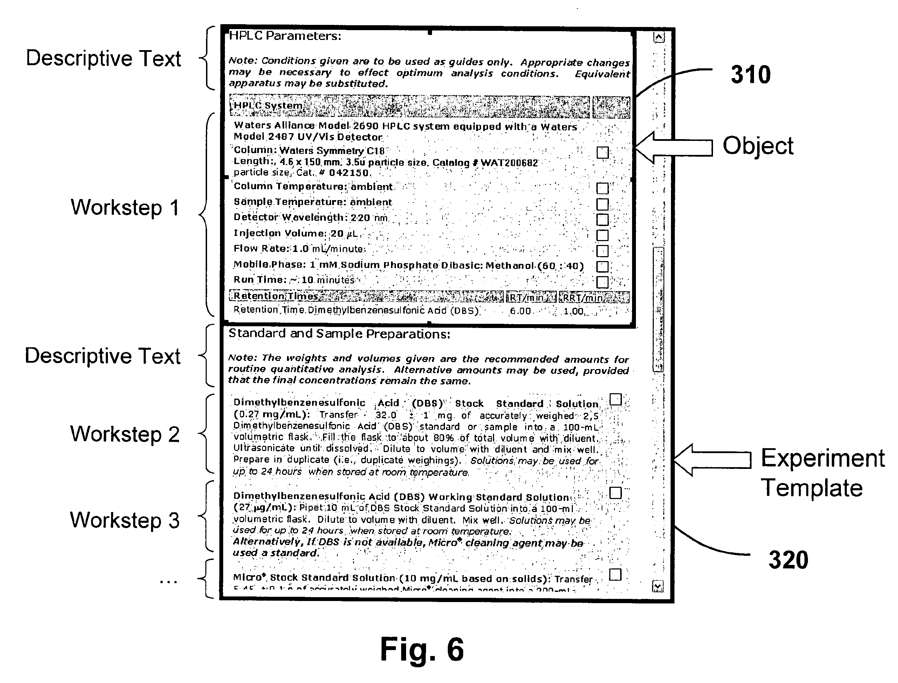

An exemplary template 320 for a standard HPLC experiment is shown in figure 6. An object 310 titled "HPLC parameters" is part of this experiment template 320. The remainder of the template 320 includes additional worksteps that are commonly used. The user can proceed through this template 320 and set the protocol of his experiment by checking the appropriate check boxes within the template 320, e.g., setting the correct detector wavelength, choosing the appropriate injection volume and so forth.

### Project, Laboratory and User Management

The user rights regarding the level of access to different modules or programs of the ELN are defined as roles and permissions. Every ELN user has to be assigned to a specific role with specific permissions.

Permissions are access rights for modules of the software. These are: none (no rights on the module), read (read rights), read-write (read and edit rights), and undelete (read and edit rights as well as rights for recovering information). Roles are free definable groups of permissions. Each user is assigned to a single role, defining his access right for modules.

Laboratories are groups of users. Each user is a member of at least a single laboratory. Laboratory membership defines access to objects and experiment templates.

Users of the ELN are assigned to at least a single laboratory, the main laboratory. Experiments created by a user belong to this laboratory. User may have different rights concerning editing and signing of objects and experiments. These rights are: edit (right to edit the experiment), object signer (right to sign objects), signer 1 (right to sign experiments), signer 2 (right to sign an experiment after signing by signer 1), approver (right to approve an experiment after 1^{st} and 2^{nd} signature).

Besides assigning users and their experiments to a specific laboratory, both can also be assigned to a specific project with participants from different laboratories. Each experiment belongs either to a laboratory or a project which are defining access rights and availability of objects. A project may either be a group of laboratories, a group of users, or a combination of both laboratories and users. In a project, users may have experiment editing and signature rights different from experiment templates that can be assigned to projects as well as to laboratories.

A laboratory or one or more users may participate in a project by adding them to the project access list. Laboratories or users may be removed from the laboratory access list, thus preventing any further access to experiments created in a project.

Object templates may be assigned to one or more laboratories, as well as to all laboratories. The available templates depend on either the laboratory or the project selected during creation of an experiment. If no project has been selected on creation of the experiment, the available objects are the ones assigned to selected laboratories as well as the ones assigned to all laboratories. If a project has been selected, only objects assigned to this project as well as the ones assigned to all laboratories are available. Accessibility of a template corresponds to the rights of a user in a laboratory or a project. Templates can additionally be categorized into groups. Experiment templates may be assigned to laboratories, projects and groups.

The available templates depend on a) the laboratory selected during creation of an experiment, b) whether or not a project has been selected on creation of the experiment, c) the project itself. If no project has been selected on creation of the experiment, the available templates are defined by the selected laboratory. If a project has been selected, only templates assigned to this project are visible. Accessibility of a template corresponds to the rights of a user in a laboratory or a project. Templates can additionally be categorized into groups.

It is envisaged that appropriate templates are provided with an input verification interface, which only allows the input of certain values as an error correction scheme. This will reduce the amount of errors.

Notebook object templates are, for example, predefined Excel sheets with formulas where the user has to enter only a few numbers and the calculation is automatically performed.

Furthermore, object templates can be created by using any free OLE objects such as MS Word files, MS Excel files, ISIS/Draw files and the like. Object templates ensure that the user enters information in the notebook in a predefined way. Existing form sheets and file-based templates can be used without modification.

The ELN according to the present invention can be customized to the format and the nomenclature of a specific work group for forms, templates, reports and the like. It is possible to create libraries of templates. Custom Templates are supported to import data. The user is able to apply and/or create templates for repetitive routine tasks.

All template-oriented features can be defined laboratory oriented, user oriented and/or project oriented.

A template editor within the template module 240 allows the user to create (predefined) templates e.g., by inserting or appending predefined objects, altering predefined objects, changing the sequence of predefined objects, using existing metadata from predefined objects, defining new metadata for objects, altering metadata for objects, defining metadata as mandatory and the like.

The template editor of the ELN according to the present invention furthermore allows assigning specific access rights to templates e.g., by assigning a template to a specific laboratory thereby restricting access to that laboratory or assigning a template to a specific project thereby restricting access to that project.

Furthermore, it is possible, by means of the template editor of the ELN, to assign additional data to templates by assigning a predefined title or a predefined description to the template, defining metadata for the entire template or defining metadata for the individual objects of a template as well as defining metadata as mandatory.

A notebook object editor creates predefined objects to be embedded in a template, i.e. an experiment. A notebook object editor allows the user to create new objects such as by uploading existing OLE documents, creating new OLE documents, altering existing OLE documents or changing the size and/or appearance of the object.

Preferably the ELN according to the present invention also contains a project editor. Using such a project editor, it is possible to assign templates to projects by defining new projects, assigning a project to a main laboratory or adding existing templates to the project. Furthermore, the project editor allows assigning access rights to templates by adding users to the project access list, removing users from the project access list, defining the access rights of new users or overriding access rights of existing users.

### Object Workflow

The long-standing standard of peer review in scientific research requires that the research process be open to inspection. In principal, every result should be reproducible by an appropriately trained researcher. Traditionally, the researcher's thoughts are recorded initially in a paper laboratory notebook. Later, these thoughts may be formalized through publications, presentations, and internal research bulletins.

One aspect of the preferred ELN relates to signatures. The ELN provides a massive reduction of time because the laboratories and the users do not have to be at the same place. Configurable signature requirements based on organizational unit, project and experiment type are supported by the present invention. The administrator may decide whether signatures are needed on each individual notebook object or for the entire experiment as well as if one or two signatures have to be applied or if signatures are necessary at all. This flexible configuration helps to adapt the ELN according to the present invention to virtually any laboratory workflow.

As has become clear from the forgoing detailed discussion an experiment according to the present invention can be regarded as a container for a plurality of entries of a different kind. These entries are referred to as objects in accordance with the generic concepts known from the methods of object-oriented programming.

An object type consists of object type data and metadata format data. A format has also an object attached to it. An object type has always at least a format object. This corresponds to the OLE object inserted by the user. If the object type has more than one format the OLE object is marked with a flag. Additionally, renditions of the object type, that is, additional formats provided by the OLE server application, are stored.

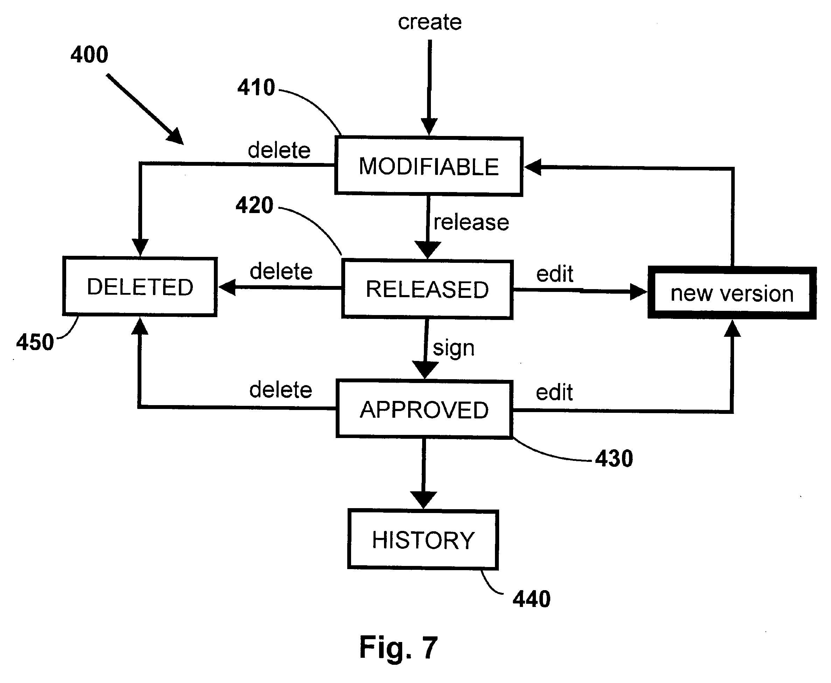

The possible states of an object and the workflow of objects 400 are shown in figure 7. According to the present invention an object preferably can have one of the following states that exist in the following steps shown in figure 7: modifiable 410, released 420, approved 430, history 440, deleted 450.

Still referring to figure 7, after an object is created, an object in the modifiable state can be modified and deleted by users having edit rights at step 410. The title, metadata, reviews, links, attachments, images, and renditions may be also modified. An object can be released by users having edit rights to pass to step 420. If an object is released, its versioning mechanism is activated and the object enters the signature cycle as the workflow passes to step 430. A user having object signer right may be notified during the release process.

If a released object gets modified, a new version is created having the status modifiable and the assigned object signer for the previous version will be notified via the messaging module 220.

If a released object is deleted by a user having edit rights, the object is marked as deleted but remains in the repository. A special view, the notebook view, can be applied in order to see the deleted objects as well as all previous versions of objects. By default, the notebook presents the report view showing only the latest object versions which have not been deleted. In the released state 420, the title, metadata, reviews and links may still be modified and associated files may be added.

A released object can be signed by a user having object signer rights. If a released object is signed, the released object converts to the approved state at step 430. In the approved state 430, users with edit rights are able to create a new version starting from the object in the approved state. The new version is created again in modifiable state 410. Reviews and links may be modified. At 440 in the workflow, in the history state, users having edit rights are able to create a new version on the basis of the object in the history state.

### Experiment Workflow

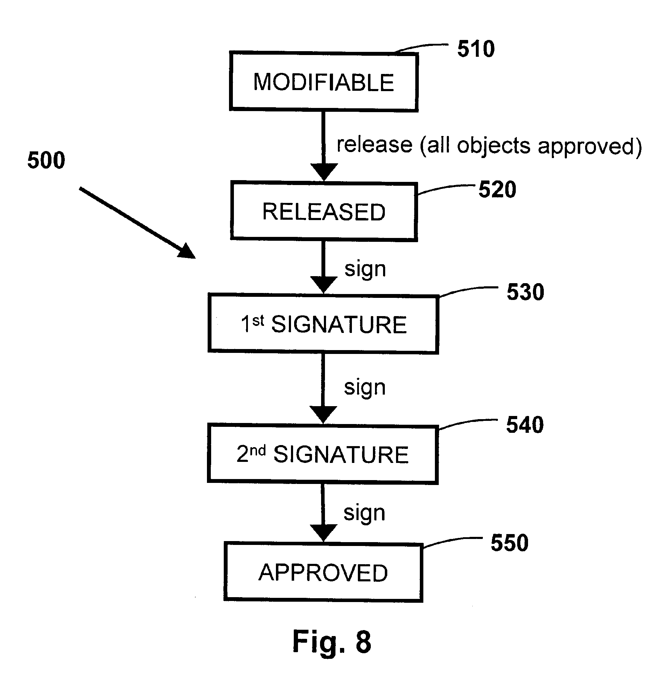

The states of an experiment and the workflow of an experiment 500 are shown in figure 8. According to the present invention an experiment preferably can have one of the following states that exist in the following steps shown in figure 8: modifiable 510, released 520, 1^{st} signature 530, 2^{nd} signature 540, and approved 550. Signatures for experiments can also be performed with the Web client.

At step 510, an experiment in the modifiable state can be modified by users having edit rights. The title, metadata, reviews, links, and attachments may be also modified. At step 520, an experiment can be released by users having edit rights only, if all objects have been approved.

If an experiment is released, the experiment enters the signature cycle at step 520. A user who has 1^{st} experiment signer rights and who has been assigned as 1^{st} signer is automatically notified. Any user having 1^{st} experiment signer rights may also be notified during the release process. A released experiment cannot be modified anymore.

If a released experiment is signed by a user having 1^{st} experiment signer rights, the status of the released experiment changes to 1^{st} signature at step 530. A user who has 2^{nd} experiment signer rights and who has been assigned as 2^{nd} signer is automatically notified. Any user having 2^{nd} experiment signer rights may also be notified during the signature process.

If an experiment with status 1^{st} signature is signed by a user having 2^{nd} experiment signer rights, the experiment changes its status to 2^{nd} signature at step 540. A user who has experiment approver rights and who has been assigned as approver is automatically notified. A user having experiment approver rights may also be notified during the release process.

At step 550, if an experiment with status 2^{nd} signature is approved by a user having experiment approver rights, the experiment changes its status to approved. On conversion to the approved state, preferably two PDF reports are generated automatically and stored in the database: a) a notebook report containing all object versions including deleted objects with corresponding comments; and b) a consolidated report containing only final and non-deleted object versions.

### Security Module

Another major aspect of the electronic laboratory notebook according to the present invention relates to means to ensure the security of the data stored therein. This is because, digital data brings with it a potential problem, namely the ease with which such information can be copied and tampered with, without the forensic trail of evidence that has been relied on for analogue and hard-copy files. The need has therefore arisen for technologies which are able to safeguard the integrity and authenticity of digital records, particularly if such records are subject to legal and/or ethical scrutiny. The preservation of integrity of digital records is particularly important where the digital records are subject to concerted and possible criminal attacks. The ELN according to the present invention provides these functionalities by means of its security module 250 shown in figure 5.

As discussed in more detail further above, according to the present invention an experiment is a collection of objects. Experiments have their own signature workflow. Every object is an individual piece of information (text, formula, graphic, and the like) which may exist in multiple versions, wherein each version is identified by the author, date and time of creation, and a corresponding audit trail showing all edits and modifications performed including date and time of the change and the like. Also notebook objects have their own signature workflow.

In order to ensure the security and integrity of stored documents, the ELN according to the present invention defines different roles in the generation process as described in more detail further above. Authors are the creators of experiments and objects. Their name is linked to the initial creation of a notebook object or to the modification of such an object. Signers are the witnesses of the work entered by the author. Preferably, there is one signer for objects and three different signers for a complete experiment. Providing a signature does not interrupt the notebook workflow. However, modifications invalidate the previous signatures. Eventually, approvers are the final signers/witnesses of the whole experiment. The signature provided by an approver closes, i.e. finalizes, the experiment. No further edits or modifications in the document are possible after approval. Optionally, it is possible to assign a deadline (date and time) for each signature to be provided.

According to a preferred embodiment of the present invention, it is made sure that author, signer and approver are three different individuals. The ELN according to the present invention stores all entries in a chronological order to the database. Thus, entries never will have exactly the same date and time, because of the sequential storing process.

The services offered electronically by the ELN according to the present invention will use different mechanisms to protect information. For instance, the Secure Sockets Layer (SSL) network protocol is used when the ELN is accessed via the web client mode. Furthermore, a Public Key Infrastructure, i.e. a trusted security facility that employs digital certificates to provide a full set of security services, should be integrated into the security module as part of the ELN server application independent of third party providers for keys and time stamps.

Objects in status "modifiable" are outside the signature workflow. However, as soon as a signature has been applied, any changes to the data do not go undetected. A complete audit trail including versioning of records and reasons is maintained for each record in the system. In addition, administrative access to the system, changes in configuration and the like are covered by an individual audit trail.

According to a preferred embodiment of the present invention the security module 250 utilizes a hash coding algorithm and a digital signature algorithm. Preferably hash coding is performed by the Secure Hash Algorithm (SHA-1) as defined by the National Institute of Standards and Technology and the encryption is done with the Digital Signature Algorithm (DSA) also defined by the National Institute of Standards and Technology.

The person skilled in the art is well aware of the general aspects of hash coding and encryption. Encryption is the process of taking sensitive information and scrambling it, so that the file is unreadable. The reverse process is called decryption, wherein the encrypted unreadable data is transformed into the original data. There are two main forms of encryption, i.e. single key (or symmetric) encryption and key pair (asymmetric) encryption. A hash function or hash code takes data of any length as input and produces a digest or hash of a finite length, usually 128 or 160 bits long. The resultant hash is used to represent (not replace) the original piece of data. In order for a hash function to be able to represent the original data it must be consistent, i.e. the same input will always produce the same output, unpredictable, i.e. given a particular hash is virtually impossible to reverse the hashing process and obtain the original data, and volatile, i.e. a slight change of the input data, for instance the change of one bit, will produce a drastic change in the hash.

The ELN according to the present invention comprises an internal private key, which is a digital value used to encrypt and decrypt digital information. This process is in accordance with Public Key Infrastructure (PKI) requirements, that is, the internal private key used for encryption can be provided by an external key provider (Certification Authority).

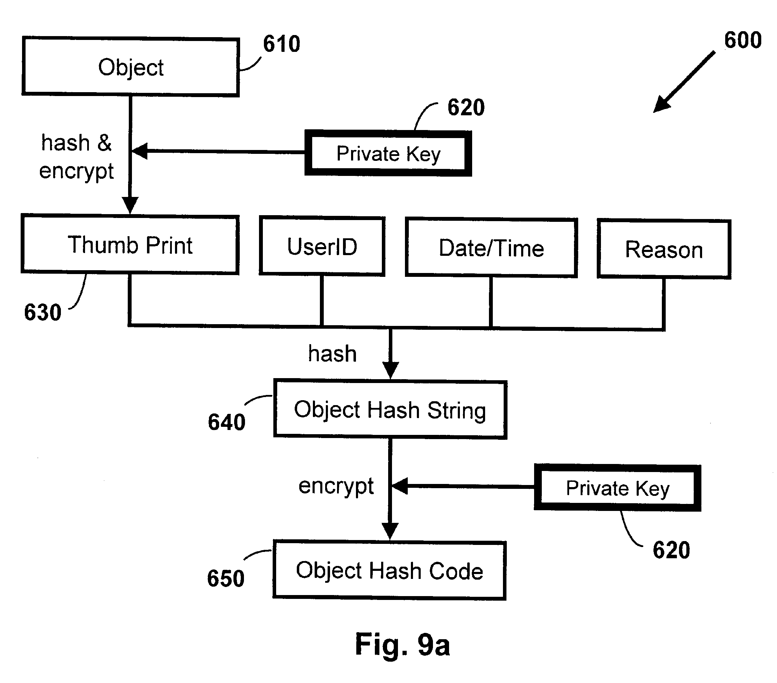

Figure 9a illustrates the mechanism 600 incorporated in the security module 250 shown in figure 5 of the ELN according to the present invention, which allows proving that an object and its associated metadata have not been changed after signing. As soon as an object 610 is saved, the object data is hashed and subsequently encrypted with an internal private key 620 resulting in a so-called thumb print 630 of the object 610. Preferably the thumb print 630 is created by means of the secure hashing algorithm SHA-1 producing a 160 bit hash code and the digital signature algorithm (DSA). The resulting thumb print 630 can be regarded as a representation of the original object 610 analogous to a human fingerprint.

On signing the object 610, the thumb print 630 is concatenated preferably with additional data being unique to the process of signing, such as the user ID of the signer, date and time of signature, the reason for signature and the like (see figure 9a). A typical reason for the signature is the approval of an object. The resulting string is hashed providing an object hash string 640. The object hash string 640 is again encrypted with the internal private key 620 resulting in an object hash code 650, which in addition to the thumb print 630 of the object 610 is based upon unique data about the signature. The object hash code 650 is stored in the database together with the object 610 as well as all the corresponding metadata such as the unique user ID of the signer, date and time of the signature, the reason for the signature and the like.

Each time an integrity check for a given object is performed, a new object hash code is created by means of the data stored in the database in the way described above and shown in figure 9a and compared with the object hash code 650 stored together with the object 610. Any discrepancy between the new object hash code and the stored object hash code 650 indicates, that the database object has been manipulated after signing.

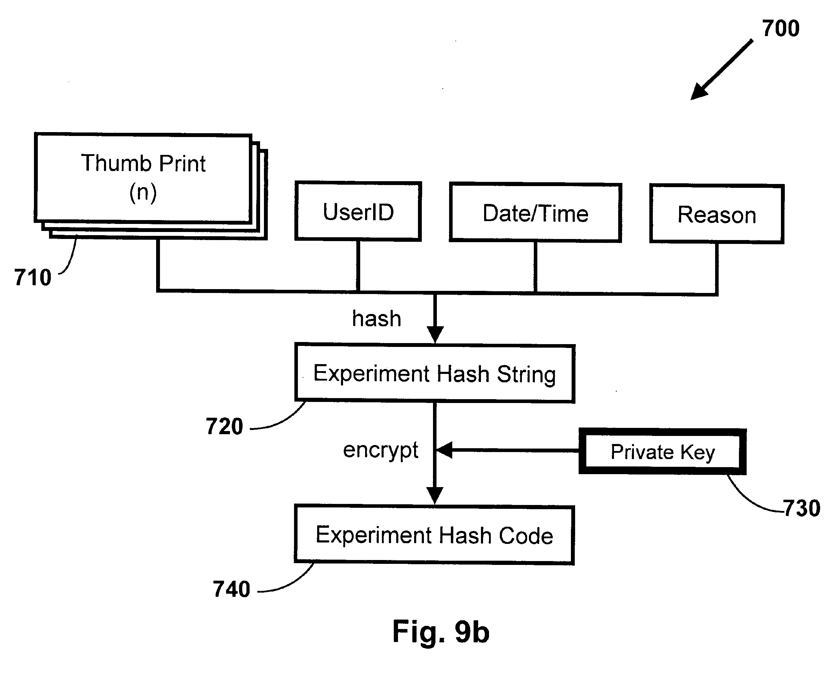

Figure 9b illustrates the mechanism 700 incorporated in the security module 250 shown in figure 5 of the ELN according to tine present invention, which allows proving that an experiment and its associated metadata have not been changed after signing.

When an experiment is signed, all thumb prints 710 created for the individual objects are concatenated and preferably additional data being unique to the process of signing, such as the user ID of the signer of the experiment, date and time of signature, the reason for signature and the like (see figure 9b), are added. A typical reason for the signature is the approval of an experiment. The resulting string is hashed providing an experiment hash string 720. The experiment hash string 720 is again encrypted with the internal private key 730 resulting in an experiment hash code 740. Preferably, the experiment hash code is created with the secure hashing algorithm SHA-1 and the encryption is performed by means of the digital signature algorithm (DSA).

Each time an integrity check for a given experiment is performed, a new experiment hash code is created by means of the data stored in the database in the way described above and shown in figure 9b and compared with the stored experiment hash code 740. Any discrepancy between the new experiment hash code and the stored experiment hash code 740 indicates, that the experiment or the objects making up this experiment have been manipulated after signing.

Each signature process for an experiment creates an individual experiment hash code. All experiment hash codes are stored together with the experiment.

Once all the signatures (preferably three) have been provided, no more changes to the experiment are possible. A unique document, preferably in PDF format, is created and stored in the database, i.e., the approved document. This document reflects the final state of the experiment and can be considered the equivalent to a traditional paper-based notebook.

Altering the content of a signed or approved document will change the hash code of the manipulated objects, and the hash code of the entire experiment. This will invalidate the signature. When performing an integrity check, the validity of the hash codes is verified. During the integrity check step, the manipulation will be detected and in such a case preferably a warning will be issued.

Altering a signature is virtually impossible, because the signature is encrypted. However, if one would succeed at this, changing an existing signature would also affect respectively the hash code of the object and experiment that the signature is attached to. When performing an integrity check, the validity of the hash codes is verified. During this step, the manipulation will be detected because the generated hash codes will not match and in such a case preferably a warning will be issued.

It is not necessary to take the creation date of an object or an experiment into account for the generation of the hash code, because the creation date in the final PDF created upon approval will still contain the original creation date. However, according to a preferred embodiment also the creation dates are taken into account for the hash codes.

As the signature date preferably is part of the encrypted hash code produced during the signing process, tampering with the signature date will also invalidate the hash code. This will likewise be detected when opening the affected document.

The date/time stamp used in the ELN according to the present invention can be generated on the server. The server date and time settings are not accessible to the users, so tampering with these would only be possible for the system administrator and would then affect all users equally. However, according to a preferred embodiment, an even higher degree of security is achieved by using a Time Stamping Authority (TSA) server in order to provide a trustworthy time source.

Another embodiment of an ELN according to the present invention can be based on the SHA1/DSA algorithm using a pair of private and public keys as known to the person skilled in the art. The ELN computes a check sum for each object based on the content thereof. The type of algorithm used for calculating the check sum is stored. This information serves to check the integrity of the objects.

When an object is signed, furthermore a thumb print is generated. This corresponds to the current electronic signature of the object, as the user must confirm the action by providing his user ID and password. This information is stored for each version taking into account the following information: user ID, sign date and time, sign text, and check sum of the content. The experiment integrity depends on the integrity of its objects. In addition, an electronic signature record is stored for each signature. Based on this record, a thumb print is calculated taking into account the check sums of the objects, the user ID, the sign time and date, and the sign text.

The integrity checks can be performed on each structure level of the experiment. At the version level, the check sum of a version is recalculated and compared with the original check sum. This action can be triggered via the experiment editor. At the object level, the check sums of all versions of an object are recalculated and compared with the original check sums. Also, this action can be triggered via the experiment editor. At the experiment level, the integrity check is done for all objects in the experiment, as long as the experiment is not signed. Experiments that are signed additionally are checked for the electronic signature.

In August 1997, the FDA released Part 11 of Title 21 of the Code of Federal Regulations, or 21 CFR Part 11 for short. The regulation outlines criteria for acceptance of electronic records, electronic signatures, and handwritten signatures. 21 CFR Part 11 allows electronic records to be equivalent to paper records and handwritten signatures. The rule applies to all industries regulated by FDA and includes cGMP, GLP and GCP. Due to its security module 250 the ELN according to the present invention is fully compliant with 21 CFR Part 11. Major fields of compliance are: role and status based user access, document modifications automatically create new versions, electronic signatures available for all documents and notebook objects, full audit trail including system and notebook audit trail, implementation of digital signatures for public key infrastructure with optional automatic inactivity logout and intruder detection and security logouts.

It will be appreciated that although the forgoing description about the features of the present invention has been directed to applications in chemistry and life sciences, the present invention beneficially can be utilized in any research and development archiving data, since the ELN according to the present invention provides among others the following advantages.

Data storage and electronic record keeping according to the ELN of the present invention is embedded in a well-designed strategy. Each notebook item is stored without modification in an electronic record (one to one copy). All related information, such as date and time stamp, size, structure and content is kept. All notebook items are stored additionally with a 100% correct graphical representation of the object. As a result, visual information is never lost even when the originating application is no longer available. Text objects, spreadsheets, chemical structures and analytical data, such as spectra and chromatograms, are stored additionally by using long term stable human readable data formats.

In changing from a paper-based laboratory notebook to an electronic laboratory notebook according to the present invention, data and knowledge become readily accessible, information is consolidated without having to change working environments, results are shared within a team, results are readily reported to authorities and reviewed, and the time/sequence approach of paper-based notebooks is replaced with a more productive project or experiment approach. This project or experiment approach according to the present invention resembles more closely the project-orientated workflow in a research and development laboratory.

The client of the ELN according to the present invention offers the highest comfort for the creation of electronic laboratory notebooks. For reviewers, approvers and laboratory managers, a powerful web interface is provided to search for notebook entries based on metadata, full text and/or chemical structures. Because the ELN according to the present invention handles each notebook object as an individual information item - knowing all about the purpose and properties - the ELN forms the ideal framework for Data Mining, i.e., the automated extraction of hidden predictive information from databases. The features of the present invention allow the user to work in compliance with good laboratory practice (GLP) regulations and regulations of the U.S. federal drug administration (FDA). The laboratory workflow is streamlined by the use of templates which reduce the effort and time spent for routine work. The generic approach of the present invention allows seamless integration of all software tools that are already used by the individual scientist.

Most of the knowledge produced in pharmaceutical, biotech and chemical companies cannot be used conveniently. None of the available electronic systems are able to store knowledge in a reusable manner. Paper notebooks represent an unused source for scientific knowledge that the subject disclosure overcomes. An ELN according to the present invention can be the basis to make this knowledge usable in the future. All information is stored in a clear structure with sufficient metadata to describe the content properly. In addition, the messaging system allows storage of comments, discussions and remarks in a searchable way.

It will be appreciated by those of ordinary skill in the pertinent art that the functions of several elements may, in alternative embodiments, be carried out by fewer elements, or a single element. Similarly, in some embodiments, any functional element may perform fewer, or different, operations than those described with respect to the illustrated embodiment. Also, functional elements (e.g., modules, databases, interfaces, computers, servers and the like) shown as distinct for purposes of illustration may be incorporated within other functional elements in a particular implementation.

While the invention has been described with respect to preferred embodiments, those skilled in the art will readily appreciate that various changes and/or modifications can be made to the invention without departing from the scope of the invention as defined by the appended claims.

## Claims

1. An electronic laboratory notebook system in a distributed communication network comprising:
at least one application server running an electronic laboratory notebook server application;
at least one client workstation running an electronic laboratory notebook client application in communication with the at least one application server via the distributed communication network; and
at least one database for storing data in communication with the at least one application server via the distributed communication network,
wherein said electronic laboratory notebook server application includes means to ensure the security of the data.

2. An electronic laboratory notebook system as recited in Claim 1, wherein said electronic laboratory notebook client application provides a graphical user interface for allowing a user to interact with said electronic laboratory notebook server application.

3. An electronic laboratory notebook system as recited in Claim 2, wherein said electronic laboratory notebook client application operates in a normal client mode and in a web client mode.

4. An electronic laboratory notebook system as recited in any one of the preceding Claims, wherein the data comprises a project, an experiment, an object and a metadata data type.

5. An electronic laboratory notebook system as recited in Claim 4, wherein an experiment is a collection of objects.

6. An electronic laboratory notebook system as recited in Claims 4 or 5,
wherein each object has an audit trail.

7. An electronic laboratory notebook system as recited in Claim 1, wherein said electronic laboratory notebook server application includes an information retrieval module for searching for specific data stored in the database by a method selected from the group consisting of an experiment search, a content search, a metadata search, a structure search and combinations thereof.

8. An electronic laboratory notebook system as recited in Claim 7, wherein the structure search allows searching for stereoselective structures and substructures.

9. An electronic laboratory notebook system as recited in Claim 1, wherein said electronic laboratory notebook server application includes a messaging module for requesting a signature from a user for certification and approval.

10. An electronic laboratory notebook system as recited in Claim 9, wherein the messaging module is further operative to:
allow the user to review an experiment and prepare a comment on an object of the experiment;
notify an author of the experiment or the object is notified of the comment and allow preparation of a reply to the comment; and
record electronically the comment and reply.

11. An electronic laboratory notebook system as recited in Claim 1, wherein several report types are provided selected from the group consisting of a notebook report, a consolidate report, an administrative report and an audit trail report.

12. An electronic laboratory notebook system as recited in Claim 1, wherein said electronic laboratory notebook system is connected to at least one instrument and said electronic laboratory notebook server application comprises an instrument interfacing module for establishing a controlled flow of data between the application server and instruments connected thereto.

13. An electronic laboratory notebook system as recited in Claim 12, wherein said respective instruments are controlled by a controlling computer, wherein a instrument agent is running on each controlling computer which is cooperating with the instrument interfacing module for transferring experimental data from the instrument to the electronic laboratory notebook server application.

14. An electronic laboratory notebook system as recited in Claim 13, wherein the data from said respective instruments are retrieved by service requests.

15. An electronic laboratory notebook system as recited in Claim 1, wherein said electronic laboratory notebook server application includes a template module for creating and editing experiment routines.

16. An electronic laboratory notebook system as recited in Claim 15, wherein said template module provides a plurality of predefined templates and comprises an object editor and a template editor for creating new templates.

17. An electronic laboratory notebook system as recited in Claim 1, wherein said electronic laboratory notebook server application includes means for managing the workflow of objects.

18. An electronic laboratory notebook system as recited in Claim 17, wherein an object can have one of the following states: modifiable, released, approved, history or deleted.

19. An electronic laboratory notebook system as recited in Claim 1, wherein said electronic laboratory notebook server application includes means for managing the workflow of experiments.

20. An electronic laboratory notebook system as recited in Claim 19, wherein an experiment can have one of the following states: modifiable, released, 1^{st} signature, 2^{nd} signature or approved.

21. An electronic laboratory notebook system as recited in Claim 1, wherein said means to ensure the security of the data comprise a security module.

22. An electronic laboratory notebook system as recited in Claim 21, wherein said security module provides means for:
(i) hashing and encrypting an object upon saving the object resulting in a thumb print of the object;
(ii) adding additional metadata associated with the signature to the thumb print upon signing the object;
(iii) hashing the string resulting from step (ii) providing an object hash string;
(iv) encrypting the object hash string resulting in an object hash code; and
(v) saving the object hash code together with the object, the object thumb print and the metadata associated with the signature in the database.

23. An electronic laboratory notebook system as recited in Claim 21, wherein said security module provides means for:
(i) concatenating a plurality of thumb prints of objects making up an experiment and adding additional metadata associated with the signature upon signing the experiment;
(ii) hashing the string resulting from step (i) providing an experiment hash string;
(iii) encrypting the experiment hash string resulting in an experiment hash code; and
(iv) saving the experiment hash code together with the objects making up the experiment, the object thumb prints and the metadata associated with the signature in the database.

24. An electronic laboratory notebook system as recited in Claims 22 or 23, wherein the additional metadata associated with the signature comprises the user ID of the signer, date and time of the signature and/or the reason for the signature.

25. An electronic laboratory notebook system as recited in any one of Claims 22 to 24, wherein said means for hashing comprise the Secure Hash Algorithm (SHA-1).

26. An electronic laboratory notebook system as recited in any one of Claims 22 to 24, wherein said encryption is performed by means of the Digital Signature Algorithm (DSA) in combination with an internal private key.

27. An electronic laboratory notebook system as recited in Claim 24, wherein date and time are provided by an internal server.

28. An electronic laboratory notebook system as recited in Claim 24, wherein date and time are provided by a Time Stamping Authority (TSA) server.

29. An electronic laboratory notebook system as recited in Claim 21, wherein the security module further comprises means for barring any additional changes of the experiment, once the final signature has been provided, for creating a unique PDF document and for storing said document in the database.

30. An electronic laboratory notebook system as recited in any one of Claims 22 to 24, wherein the security module further comprises means for performing an integrity check by verifying the validity of the hash codes and issuing a warning, when a manipulation is detected.

31. An electronic laboratory notebook system as recited in Claim 21, wherein the security module further comprises means for invalidating any signatures, when the status of an experiment is set back to the modifiable state, such that signatures have to be provided again.

32. An electronic laboratory notebook system as recited in Claim 30, wherein the integrity check is performed on a version level of the data by recalculating a check sum and comparing the recalculated check sum with an original check sum.

33. An electronic laboratory notebook system as recited in Claim 30, wherein the integrity check is performed on an object level.

34. An electronic laboratory notebook system as recited in Claim 30, wherein the integrity check is performed on an experiment level.

35. A server for determining if an object stored as part of an electronic notebook has been modified, wherein the server communicates with clients via a distributed computing network, and wherein the server comprises:
(a) a memory storing an instruction set and the object related to at least one experiment within the electronic notebook; and
(b) a processor for running the instruction set, the processor being in communication with the memory and the distributed computing network, wherein the processor is operative to:
(i) generate a thumb print based upon the object by hashing and encrypting the object;
(ii) generate a object hash string based upon the thumb print and the signature;
(iii) encrypt the object hash string with a system internal private key to create an object hash code;
(iv) regenerate a duplicate encrypted object hash code based upon the object and the signature; and
(v) compare the duplicate encrypted object hash code with the encrypted object hash code,
wherein if the duplicate encrypted object hash code and the encrypted object hash code match, the object is authenticated.

36. A server as recited in Claim 35, wherein the processor is further operative to generate the object hash string based upon a date.

37. A server as recited in Claim 35, wherein the signature is an electronic signature of an author and two witnesses.

38. A server as recited in Claim 35, wherein the processor is further operative to set a state of the object selected from the group consisting of modifiable, released, approved, history, and deleted such that the state of the object controls access to the object.

39. A server as recited in Claim 35, wherein a plurality of objects within the electronic notebook form an experiment, wherein the processor is further operative to set a state of the experiment selected from the group consisting of modifiable, released, 1^{st} signature, 2^{nd} signature, and approved based upon user input.

40. A computer-readable medium whose contents cause a computer system to perform a method for authenticating objects stored as electronic notebooks, the computer system having a server program and a client program with functions for invocation by performing the steps of:
(a) storing objects related to at least one experiment within the electronic notebook;
(b) generating a thumb print based upon the object by hashing and encrypting the object;
(c) generating a object hash string based upon the thumb print and the signature;
(d) encrypting the object hash string with a system internal private key to create an object hash code;
(e) regenerating a duplicate encrypted object hash code based upon the object and the signature; and
(f) comparing the duplicate encrypted object hash code with the encrypted object hash code,
wherein if the duplicate encrypted object hash code and the encrypted object hash code match, the object is authenticated.

41. A server for storing an experiment having a plurality of objects as part of an electronic notebook, wherein the server communicates with clients via a distributed computing network, and wherein the server comprises:
(a) a memory storing an instruction set and the experiment, the experiment being: a collection of objects in a container that is similar to a traditional page, each object being similar to an entry in a traditional notebook; and metadata for providing context to interpret the collection; and
(b) a processor for running the instruction set, the processor being in communication with the memory and the distributed computing network, wherein the processor is operative to manage access to the experiment.

42. A server as recited in Claim 41, wherein the objects are selected from the group consisting of test data, images, tables and graphs.

43. A server as recited in Claim 41, wherein the processor is further operative to ciassify the experiment and, as a result of classification, link an attribute to the experiment such that the attribute defines a plurality of parameters that are available for incorporation into the experiment.

44. A server as recited in Claim 41, wherein the plurality of parameters is a template.

45. A server as recited in Claim 41, wherein the processor is further operative to lock the experiment from further editing after receipt of a signatory authority message.

46. A server as recited in Claim 45, wherein the processor is further operative to validate experiment locking by generating and encrypting a hash code for comparison with subsequently generated and encrypted hash codes.
